# EUROPÄISCHE PATENTSCHRIFT

(11) **EP 0 947 306 B1**
(45) Veröffentlichungstag und Bekanntmachung des Hinweises auf die Patenterteilung: **27.06.2001**
(21) Anmeldenummer: 99104879.4
(22) Anmeldetag: 11.03.1999
(51) Int. Cl.: B29C 51/26, B29C 51/32, B26F 1/40, B26D 7/08

(54) **Vorrichtung zum Ausstanzen oder zum kombinierten Formen und Ausstanzen von aus thermoplastischer Kunststoffolie tiefgezogenen Formteilen**
Apparatus for punching out or combined forming and punching out of parts which are deep drawn from thermoplastic sheets
Appareil à découper ou appareil à former et découper des objets moulés par emboutissage de feuilles thermoplastiques

(30) Priorität: 04.04.1998 DE 19815189
(43) Veröffentlichungstag der Anmeldung: 06.10.1999
(73) Patentinhaber: Illig, Adolf Maschinenbau GmbH & Co., 74081 Heilbronn (DE)
(72) Erfinder: Wagner, Hans Dieter Dr., 74626 Bretzfeld-Waldbach (DE)

(56) Entgegenhaltungen:
- DE-A- 3 339 340
- DE-A- 3 346 628
- US-A- 3 724 308
- US-A- 4 105 386

## Beschreibung

Die Erfindung betrifft eine Vorrichtung zum Ausstanzen bzw. kombinierten Formen und Ausstanzen von aus einer erwärmten thermoplastischen Kunststoffolie tiefgezogenen Formteilen nach der Gattung des Hauptanspruches.

Bei einer bekannten Vorrichtung dieser Gattung (DE-A- 33 46 628) erfolgt die Verformung des Formteils mittels Druckluft unter Zuhilfenahme eines pneumatisch angetriebenen Streckhelfers. Anstelle des pneumatischen Streckhelfers sind sowohl hydraulisch als auch motorisch angetriebene Streckhelfer bekannt, die einen gleichmäßigeren Bewegungsablauf gewährleisten, wodurch qualitativ bessere Formteile hergestellt werden können. Motorische Streckhelfer werden dabei vorzugsweise von Servomotoren über Kugelrollspindel angetrieben, weil sich damit rasch beliebige Bewegungsabläufe und Endlagen definieren und verändern lassen.

Wenn die Stanzstation als kombinierte Form-/Stanzstation ausgebildet ist, erfolgt nach dem Formen und Abkühlen der Formteile durch eine zusätzliche Hubbewegung des Formtisches das Austrennen der Formteile. Dies verursacht Stanzschläge, die sich über das Werkzeugoberteil auf die Oberbrücke übertragen. Von der Oberbrücke aus erfolgt eine Übertragung der Stanzschläge auf die Antriebseinrichtung der Streckhelfer. Dies kann bei Bauteilen des hydraulischen Antriebes (z. B. des Hydraulikventils einschließlich Elektronik) und insbesondere bei denen des motorisch angetriebenen Streckhelfers (z. B. des Drehgebers) zu einer Reduzierung der Lebensdauer dieser Bauteile führen.

Immerhin muß mit Taktzahlen bis 40 Takte pro Minute bei solchen Vorrichtungen gerechnet werden. Versuche mit dem Einbau elastischer Bauelemente zwischen Oberbrücke und Antriebseinrichtung brachten keine durchgreifende Verbesserung, sondern zusätzliche Schwingungen durch die Elastizität dieser Elemente.

Erfolgt das Formen der Formteile in einer der Stanzstation vorgeschalteten separaten Formstation, muß das Stanzwerkzeug die volle Materialstärke der dann abgekühlten Kunststoffolie durchtrennen. Die Stanzschläge werden hier noch größer, die vom Werkzeug auf die Ober- bzw. Unterbrücke übertragen werden. Auch an diesen Brücken sind Einrichtungen befestigt (z. B. Antriebe für Auswerfer, Lichtschranken für die Vorschubsteuerung der Folienbahn mit eingeformten Formteilen), die den Stanzschlägen ausgesetzt sind.

Der Erfindung liegt die Aufgabe zugrunde, die Vorrichtung so zu gestalten, daß die Auswirkungen der Stanzschläge auf die an der Ober-/Unterbrücke befestigten Einrichtungen reduziert werden, so daß diese eine längere Lebensdauer aufweisen. Die dazu eingesetzten Bauteile sollten einfach und billig in der Herstellung sein, sich leicht einbauen lassen und ggf. an vorhandenen Vorrichtungen leicht nachrüsten lassen.

Zur Lösung dieser Aufgabe werden die kennzeichnenden Merkmale des Hauptanspruches vorgeschlagen. Es hat sich gezeigt, daß die Zwischenschaltung von Dämpfungspaketen aus in sich starren Platten die Übertragung der Stanzschläge deutlich reduziert.

Zweckmäßige Weiterbildungen der Erfindung sind Gegenstand der abhängigen Ansprüche.

Ein Ausführungsbeispiel der Vorrichtung mit einer kombinierten Form-/Stanzstation nach der Erfindung ist anhand der schematischen Zeichnungen näher beschrieben. Es zeigt:

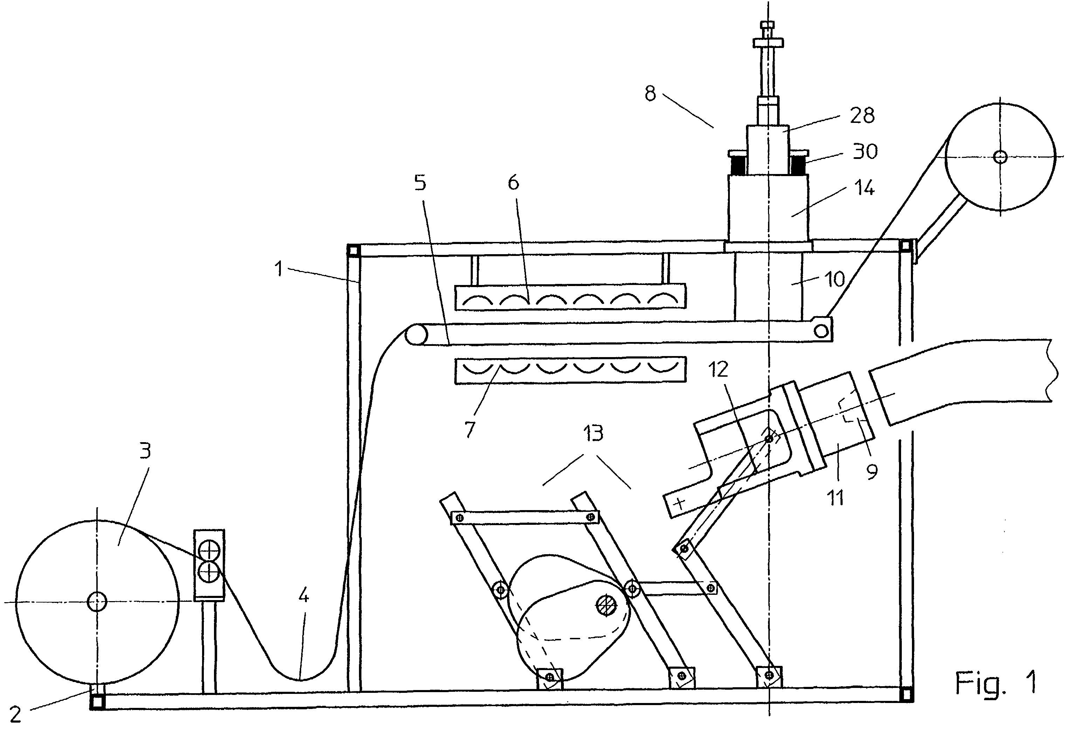

- Figur 1 -: eine Längsdarstellung der Vorrichtung

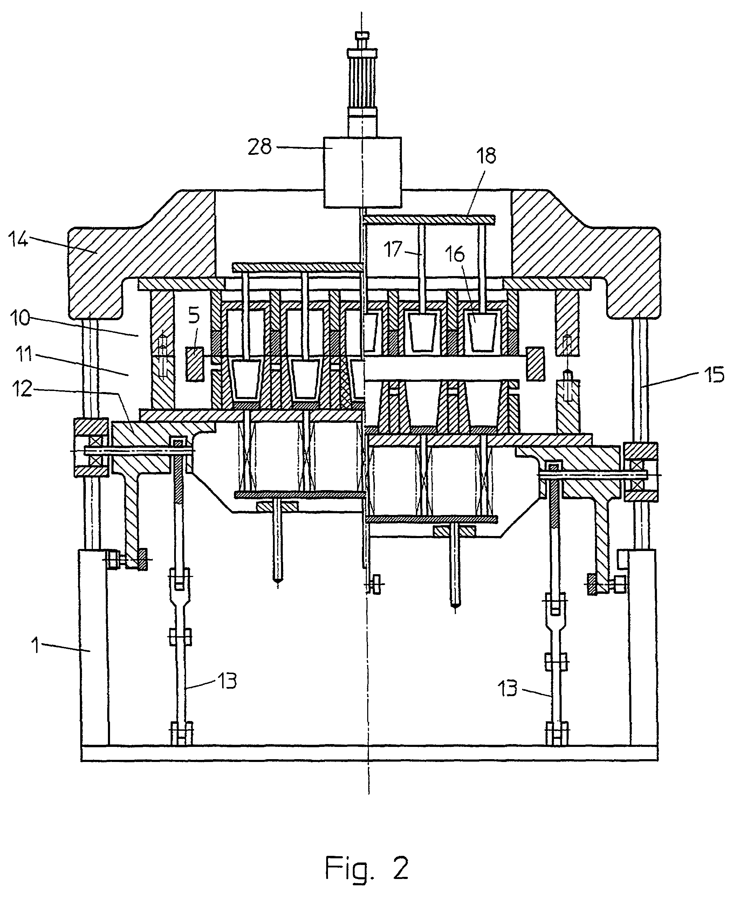

- Figur 2 -: einen Querschnitt durch die kombinierte Form-/Stanzstation der Vorrichtung
- Figur 3 -: einen Querschnitt durch die Oberbrücke mit einer motorischen Antriebseinrichtung für die Streckhelfer.

In einem Gestell 1 sind die wesentlichen Teile der Vorrichtung untergebracht, eine Rollenaufnahme 2 steht eingangseitig. Zum intermittierenden Transport der von einer Rolle 3 abgezogenen Folienbahn 4 dient eine Transporteinrichtung 5, die aus nicht dargestellten umlaufenden Ketten mit Spitzlaschen besteht. Heizungen 6, 7 sind beiderseits der Folienbahn 4 angeordnet. Bei Verkettung der Vorrichtung mit einem vorgeschalteten Extruder entfallen die Rollenaufnahme und ggf. die Heizungen 6, 7.

In Durchlaufrichtung folgt eine kombinierte Form-/Stanzstation 8, in der herzustellende Formteile 9 durch Differenzdruck geformt und aus der Folienbahn 4 ausgestanzt werden. Dies erfolgt mittels eines auswechselbaren Form-/Stanzwerkzeuges, bestehend aus Unterteil 11 und Oberteil 10. Das Unterteil 11 sitzt dabei auf einer schwenkbaren und/oder vertikal beweglichen Unterbrücke 12, die über eine Antriebseinrichtung 13 bewegt wird. Das Oberteil 10 sitzt an einer starren Oberbrücke 14, die über Säulen 15 mit dem Gestell 1 verbunden ist.

An der Oberbrücke 14 sitzen Einrichtungen 32 zur mechanischen Vorstreckung der Formteile 9 in Form von Streckhelfern 16, die pro Formnest vorgesehen und über Stangen 17 mit einer Platte 18 verbunden sind. An dieser Platte 18 greift eine Antriebseinrichtung 19 an, die an der Oberbrücke 14 starr befestigt ist.

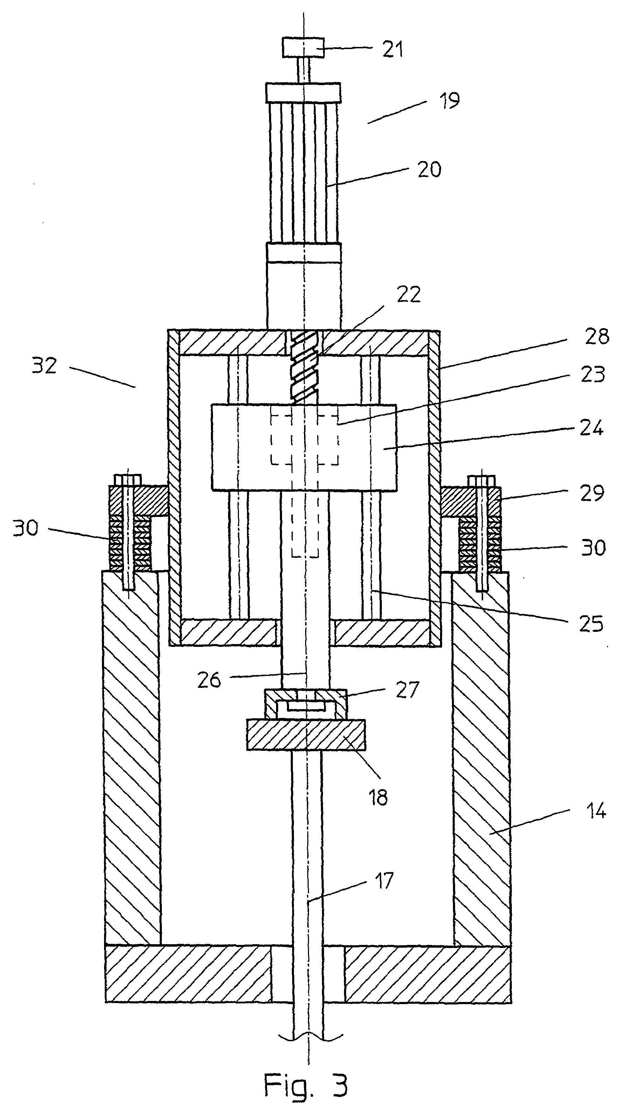

In Figur 3 ist der Anbau eines servomotorischen Antriebes als Antriebseinrichtung 19 dargestellt. Ein Servomotor 20 mit Drehgeber 21 treibt über eine Kugelrollspindel 22 und eine entsprechende Mutter 23 einen Schlitten 24 linear an. Dieser Schlitten 24 ist an Führungen 25 geführt und mit der Stange 26 verbunden. Über eine Kupplung 27 steht die Stange 26 mit der Platte 18 in Wirkverbindung, die die Streckhelfer 16 trägt. Servomotor 20 und Führungen 25 sitzen an einem Käfig 28 und bilden so eine geschlossene Einheit, die als Ganzes auf die Oberbrücke 14 gesetzt und dort mit dieser starr verbunden wird. Hierzu ist der Käfig 28 mit Anschraubplatten 29 versehen. Zwischen Anschraubplatten 29 und Oberbrücke 14 wird erfindungsgemäß je ein Dämpfungspaket 30 zwischengebaut, das die Übertragung von Stanzschlägen von der Oberbrücke 14 auf die Antriebseinrichtung 19 dämpft. Ein Dämpfungspaket 30 besteht aus einzelnen, in sich starren Platten 31 aus Metall oder Kunststoff. Bei Metall bietet sich Stahlblech in der Dicke von 1 bis 3 mm an, bei Kunststoff die Werkstoffe Polypropylen, Polystyrol oder Polykarbonat gleicher Dicke. Eine beliebige Kombination von Platten aus Metall und Kunststoff hat ebenfalls gute Dämpfungseigenschaften. Die Anzahl der Platten 31 liegt vorzugsweise zwischen 10 und 30.

Die Vorrichtung ist so dargestellt, daß auf der Unterbrücke 12 die formgebende Werkzeughälfte 11 sitzt. Vorrichtungen können aber genauso umgekehrt aufgebaut sein, das heißt, die Werkzeughälfte 11 sitzt dann an der Oberbrücke 14, die Antriebseinrichtungen 19 analog an der Unterbrücke 12. Bei Stanzstationen ist es genauso bekannt, die Stanzwerkzeuge teils an der Oberbrücke 14, teils an der Unterbrücke 12 zu befestigen. Die Dämpfungspakete 13 sind entsprechend an Oberbrücke 14 und/oder an der Unterbrücke 12 befestigt, je nachdem, wo Einrichtungen sitzen, die durch Stanzschläge zerstört werden könnten.
Es hat sich gezeigt, daß trotz dieser starren Verbindung zwischen Oberbrücke 14 und Antriebseinrichtung 19 Stanzschläge wesentlich gedämpft werden, so daß der Ausfall von Bauteilen deutlich reduziert wird.

## Patentansprüche

1. Vorrichtung zum Ausstanzen bzw. zum kombinierten Formen und Ausstanzen von Behältern (9), die aus einer erwärmten thermoplastischen Kunststoffolie (4) tiefgezogen sind, mit einem intermittierendem Transport (5) und mit einer Stanzstation bzw. einer kombinierten Form-/Stanzstation (8) mit Ober- und Unterbrücke (14, 12), wobei an der Ober-/Unterbrücke (14,12) Einrichtungen (32) wie z. B. Antriebe (19,20,21), Auswerfereinrichtungen, Sensoren, angeordnet sind, gekennzeichnet durch Dämpfungspakete (30) zwischen Ober- und/oder Unterbrücke (12, 14) und diesen Einrichtungen (32), die aus mehreren flachen Platten (31) bestehen.

2. Vorrichtung nach Anspruch 1 dadurch gekennzeichnet, daß die Platten (31) aus Metall bestehen.

3. Vorrichtung nach Anspruch 1 dadurch gekennzeichnet, daß die Platten (31) aus Kunststoff bestehen.

4. Vorrichtung nach Anspruch 1 dadurch gekennzeichnet, daß die Dämpfungspakete (30) aus einer Kombination von Platten (31) aus Metall und aus Kunststoff gebildet werden.

5. Vorrichtung nach Anspruch 1, 2 oder 4 dadurch gekennzeichnet, daß die Metallplatten (31) aus Stahl bestehen.

6. Vorrichtung nach Anspruch 3 oder 4 dadurch gekennzeichnet, daß die Kunststoffplatten aus Polypropylen, Polystyrol oder Polykarbonat bestehen.

7. Vorrichtung nach einem der Ansprüche 1 bis 6 dadurch gekennzeichnet, daß die Dicke der Platten (31) zwischen 1 und 3 mm liegt.

8. Vorrichtung nach einem der Ansprüche 1 bis 7 dadurch gekennzeichnet, daß die Anzahl der Platten (31) zwischen 10 und 30 liegt.

## Claims

1. Device for punching-out or for combined moulding and punching-out of containers (9), which are deep-drawn from a heated thermoplastic synthetic material foil (4), with an intermittent transport (5) and with a punching station or a combined moulding and punching station (8) with upper and lower bridges (14, 12), wherein devices (32), such as for example drives (19, 20, 21), ejector devices and sensors, are arranged at the upper and lower bridges (14, 12), characterised by damping stacks (30), which consist of several flat plates (31), between the upper and/or lower bridges (12, 14) and these devices.

2. Device according to claim 1, characterised in that the plates (31) consist of metal.

3. Device according to claim 1, characterised in that the plates (31) consist of synthetic material.

4. Device according to claim 1, characterised in that the damping stacks (30) consist of a combination of plates (31) of metal and of synthetic material.

5. Device according to claim 1, 2 or 4, characterised in that the metal plates (31) consist of steel.

6. Device according to claim 3 or 4, characterised in that the synthetic material plates consist of polypropylene, polystyrol or polycarbonate.

7. Device according to one of claims 1 to 6, characterised in that the thickness of the plates (31) lies between 1 and 3 millimetres.

8. Device according to one of claims 1 to 7, characterised in that the number of plates (31) lies between 10 and 30.

## Revendications

1. Dispositif pour découper et/ou former et découper de façon combinée des récipients (9) obtenus par emboutissage profond d'un film (4) de matière thermoplastique chauffée, avec transport intermittent (5) et poste de découpe ou poste combiné de formage/découpe (8), comprenant un portique supérieur et un portique inférieur (14, 12), le portique supérieur/inférieur (14, 12) comportant des installations (32) telles que des moyens d'entraînement (19, 20, 21), des installations d'éjection, des capteurs,
caractérisé par
des paquets d'amortissement (30) installés entre le portique supérieur et/ou inférieur (12, 14) et les installations (32), ces paquets étant formés de plusieurs plaques planes (31).

2. Dispositif selon la revendication 1,
caractérisé en ce que
les plaques (31) sont en métal.

3. Dispositif selon la revendication 1,
caractérisé en ce que
les plaques (31) sont en matière plastique.

4. Dispositif selon la revendication 1,
caractérisé en ce que
les paquets d'amortissement (30) sont formés d'une combinaison de plaques (31) en métal et en matière plastique.

5. Dispositif selon l'une quelconque des revendications 1, 2 ou 4,
caractérisé en ce que
les plaques métalliques (31) sont en acier.

6. Dispositif selon l'une quelconque des revendications 3 ou 4,
caractérisé en ce que
les plaques de matière plastique sont en polypropylène, en polystyrène ou en polycarbonate.

7. Dispositif selon l'une quelconque des revendications 1 à 6,
caractérisé en ce que
l'épaisseur des plaques (31) est comprise entre 1 et 3 mm.

8. Dispositif selon l'une quelconque des revendications 1 à 7,
caractérisé en ce que
le nombre des plaques (31) est compris entre 10 et 30.
